# EUROPEAN PATENT APPLICATION

(11) **EP 3 477 421 A1**
(43) Date of publication of application: **01.05.2019**
(21) Application number: 17823642.8
(22) Date of filing: 05.07.2017
(51) Int. Cl.: G06F 1/16, G06F 3/041

(54) **WRISTBAND MOBILE TERMINAL AND CONTROL METHOD THEREOF**

(30) Priority: 08.07.2016 CN 201610542688
(71) Applicant: Guangdong OPPO Mobile Telecommunications Corp., Ltd., Wusha, Chang'an Dongguan Guangdong 523860 (CN)
(72) Inventor: LIN, Yugui, Dongguan Guangdong 523860 (CN); CHENG, Jiao, Dongguan Guangdong 523860 (CN)
(74) Representative: Manitz Finsterwald Patent- und Rechtsanwaltspartnerschaft mbB
(86) International application number: PCT/CN2017/091852
(87) International publication number: WO 2018/006830

(57) **Abstract**

A wristband mobile terminal and a control method thereof. The wristband mobile terminal comprises a terminal body (10); a circular band (20); and a connecting portion (30). The terminal body (10) has a display screen surface (11) and a back face (12) disposed facing away from each other, wherein the display screen surface (11) is used for displaying content and touch-control operations, and the back face (12) is provided with a containing portion (13). The circular band (20) is contained in the containing portion (13), and the connecting portion (30) is disposed between the circular band (20) and the terminal body (10). When the circular band (20) is connected to the terminal body (10) via the connecting portion (30), the wristband mobile terminal forms a closed ring. By using the structure described above, the circular band (20) can be contained in the containing portion (13) when the mobile terminal is not worn and the wristband mobile terminal can be used as an ordinary mobile terminal. When the mobile terminal is to be worn, two ends of the terminal body (10) are connected to enable a user to wear the mobile terminal on the wrist, thereby effectively achieving a balance between increased mobile terminal screen size and carrying convenience, and increasing the portability and flexibility of the wristband mobile terminal.

## Description

### FIELD

The present disclosure relates to a field of electronic technology, and more particularly, to a wristband mobile terminal and a control method thereof.

### BACKGROUND

At present, mobile phones, tablet computers and other mobile terminals tend to have a bigger and bigger display screen in order to meet the user's demand for display effects. As the display screen of the mobile terminal is enlarged, the volume of the mobile terminal is increased, and thus the problem that the mobile terminal is inconvenient to carry becomes more and more prominent. Accordingly, how to effectively balance the increased screen size and portability of mobile terminals has become an urgent problem to be solved.

### SUMMARY

Embodiments of the present disclosure disclose a wristband mobile terminal and a control method thereof, which can improve portability of the wristband mobile terminal.

Embodiments of the present disclosure provide a wristband mobile terminal. The wristband mobile terminal includes a terminal body, a ring band and a connecting portion, the terminal body having a display screen face and a back face opposite to each other, the display screen face being used for displaying content and a touch operation, and the back face being provided with a containing portion; the ring band being contained in the containing portion; and the connecting portion being provided between the ring band and the terminal body. When the ring band is connected to the terminal body through the connecting portion, the wristband mobile terminal forms a closed ring.

Preferably, the terminal body has a pair of long edges disposed opposite each other and a pair of short edges disposed opposite each other, the pair of short edges being connected with the pair of long edges; the containing portion is a containing cavity provided in the back face, and the containing cavity has an opening located in one of the short edges; the ring band has a first end and a second end, the first end is slidably provided in the containing cavity, and the second end protrudes to the outside of the terminal body through the opening of the containing cavity and is connected to the terminal body by means of the connecting portion, so that the wristband mobile terminal forms the closed ring.

Preferably, the terminal body has a pair of long edges disposed opposite each other and a pair of short edges disposed opposite each other, the pair of short edges being connected with the pair of long edges; the containing portion is a reel provided in the back face and located in one of the short edges; the ring band has a first end and a second end, the first end is wound around the reel, and the second end protrudes to the outside of the terminal body through the reel and is connected to the terminal body by means of the connecting portion, so that the wristband mobile terminal forms the closed ring.

Preferably, the connecting portion includes a connecting element provided at the second end of the ring band and a connecting cavity provided in the other short edge of the back face of the terminal body; the connecting element at the second end is snapped in the connecting cavity provided in the short edge, such that the wristband mobile terminal forms the closed ring.

Preferably, the connecting element at the second end includes a first surface and a second surface, the second surface being parallel to a plane where the ring band is, and the first surface being perpendicular to a plane where the first surface is and the plane where the ring band is. The connecting cavity in the short edge is L-shaped.

Preferably, the terminal body is flexible and can be bent by an external force.

Preferably, the containing cavity includes a pair of long edges arranged opposite each other and a pair of short edges arranged opposite each other, the pair of short edges of the containing cavity being connected with the pair of long edges of the containing cavity; the opening of the containing cavity is provided in one of the short edges of the containing cavity; the long edges of the containing cavity have a length less than a length of the long edges of the terminal body, and the opening of the containing cavity has a length less than or equal to a length of the short edge of the containing cavity.

Preferably, the ring band is provided with a fixing member, and the fixing member has a length greater than the length of the opening of the containing cavity and less than the length of the short edge of the containing cavity.

Correspondingly, embodiments of the present disclosure provide a control method for a wristband mobile terminal. The wristband mobile terminal includes a flexible terminal body, the terminal body can be bent by an external force. The method includes:
detecting whether the terminal body is bent;
determining a content display area and a touch operation area of a display screen area of a display screen of the wristband mobile terminal, when the terminal body is bent;
receiving an operation instruction input from the touch operation area, and determining content to be displayed based on the operation instruction; and
outputting the content to be displayed in the content display area.

Preferably, the content display area is an intermediate area of the display screen area.

Implementing embodiments of the present disclosure has the following beneficial effects.

In embodiments of the present disclosure, the wristband mobile terminal includes the terminal body, the ring band, and the connecting portion; the terminal body has the display screen face and the back face arranged opposite each other, the display screen face is used for displaying content and touch operations, and the back face is provided with the containing portion; the ring band is contained in the containing portion; the connecting portion is provided between the ring band and the terminal body. When the ring band is connected to the terminal body through the connecting portion, the wristband mobile terminal forms the closed ring. With the embodiments of the present disclosure, the ring band can be contained in the containing portion when not in need, and hence the wristband mobile terminal can act as an ordinary mobile terminal; when in need, the ring band can be connected to both ends of the terminal body, and thus the user can wear it on the wrist. As a result, it is possible to effectively achieve a balance between the increased screen size and the inconvenient-to-carry problem of the mobile terminal, and improve the portability and flexibility of the wristband mobile terminal.

### BRIEF DESCRIPTION OF THE DRAWINGS

In order to illustrate technical solutions of the present disclosure more clearly, drawings required in embodiments will be briefly described below. Obviously, the drawings described below only show a part of embodiments of the present disclosure, and based on these drawings, other drawings can be obtained by those of ordinary skill in the art without creative efforts.
Fig. 1 illustrates a schematic view of a wristband mobile terminal according to an embodiment of the present disclosure.
Fig. 2 illustrates a schematic view of another wristband mobile terminal according to an embodiment of the present disclosure.
Fig. 3 illustrates a side schematic view of a wristband mobile terminal according to an embodiment of the present disclosure.
Fig. 4 illustrates a schematic view of yet another wristband mobile terminal according to an embodiment of the present disclosure.
Fig. 5 illustrates a flow chart of a control method for a wristband mobile terminal according to an embodiment of the present disclosure.
Fig. 6 illustrates a schematic view of yet another wristband mobile terminal according to an embodiment of the present disclosure.
Fig. 7 illustrates a schematic view of yet another wristband mobile terminal according to an embodiment of the present disclosure.

### DETAILED DESCRIPTION

Technical solutions in embodiments of the present disclosure will be described clearly and completely with reference to the drawings. Obviously, the described embodiments are only a part of rather than all of the embodiments of the present disclosure. Based on the embodiments of the present disclosure, all other embodiments obtained by those skilled in the art without creative efforts are in the protection scope of the present disclosure.

Embodiments of the present disclosure provide a wristband mobile terminal and a control method thereof, which can improve portability of the wristband mobile terminal. The wristband mobile terminal and the control method thereof will be elaborated below.

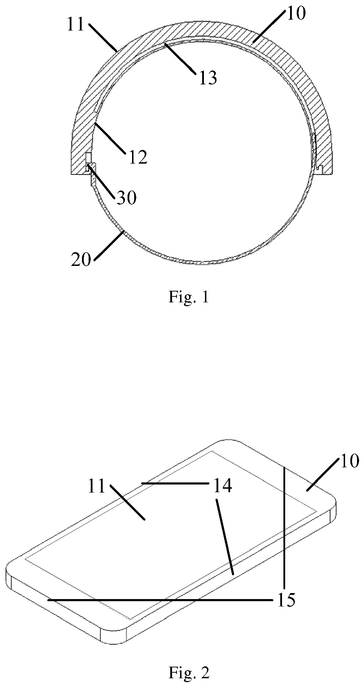

Referring to Fig. 1 that is a schematic view of a wristband mobile terminal according to an embodiment of the present disclosure, the wristband mobile terminal illustrated in Fig. 1 can be a mobile terminal having a display screen, such as a smart phone (e.g., an Android mobile phone, an iOS mobile phone, etc.), a tablet computer, a palmtop computer, and a personal digital assistant (PDA). As illustrated in Fig. 1, the wristband mobile terminal can include a terminal body 10, a ring band 20, and a connecting portion 30.

The terminal body 10 has a display screen face 11 and a back face 12 opposite to each other, the display screen face 11 is used for displaying content and performing touch operations, and the back face 12 is provided with a containing portion 13. The ring band 20 is contained in the containing portion 13. The connecting portion 30 is provided between the ring band 20 and the terminal body 10. When the ring band 20 is connected to the terminal body 10 through the connecting portion 30, the wristband mobile terminal forms a closed ring.

In the embodiment of the present disclosure, the display screen face 11 is provided with a display screen, the display screen is generally a touch display screen, and can not only display a user interface and other content, but also allow a user to perform touch operations on the display screen, which will not be limited in the embodiments of the present disclosure.

In the embodiment of the present disclosure, an opposite face to the display screen face 11 is the back face 12 of the terminal body 10, i.e. a face of the wristband mobile terminal attached to the user's skin when the user wears the wristband mobile terminal. The back face 12 is provided with the containing portion 13; when the user does not wear the wristband mobile terminal, the ring band 20 can be contained in the containing portion 13; and when the user needs to wear the wristband mobile terminal, the user can draw the ring band 20 out of the containing portion 13, and connect the ring band 20 to both ends of the terminal body 10 through the connecting portion 30.

In the embodiment of the present disclosure, when the ring band 20 is connected to both ends of the terminal body 10 through the connecting portion 30, the wristband mobile terminal can form the closed ring.

Preferably, the terminal body 10 can be flexible, that is, the terminal body 10 can be bent under the action of an external force.

Specifically, the display screen provided to the display screen face 11 of the terminal body 10 can be a flexible display screen, a housing and internal components of the terminal body 10 can all be flexible, so that the wristband mobile terminal can be normally used when forming the closed ring.

Preferably, the terminal body has a pair of long edges 14 disposed opposite each other and a pair of short edges 15 disposed opposite each other, as illustrated in Fig. 2 that is a schematic view of another wristband mobile terminal according to an embodiment of the present disclosure. The pair of short edges 15 is connected with the pair of long edges 14, so as to constitute four frames of the terminal body 10. The containing portion 13 can be a containing cavity provided in the back face 12, and the containing cavity has a band-like shape and has an opening situated in one of the short edges 15 of the terminal body 10.

Further, the ring band 20 includes a first end and a second end opposite to each other. The first end is provided in the containing cavity, and the ring band 20 is slidably contained in the containing cavity. The second end can protrude to the outside of the terminal body 10 through the opening of the containing cavity, and be connected to the other short edge 15 of the terminal body 10 by means of the connecting portion 30, so that the wristband mobile terminal can form the closed ring.

Preferably, the containing portion 13 can be a reel provided in the back face 12, and the reel is provided in one of the short edges 15 of the terminal body 10. The first end of the ring band 20 is wound around the reel, and the second end of the ring band 20 protrudes to the outside of the terminal body 10 through the opening in the back face of the terminal body 10 via the reel and is connected to the other short edge 15 of the terminal body 10 by means of the connecting portion 30, so that the wristband mobile terminal can form the closed ring.

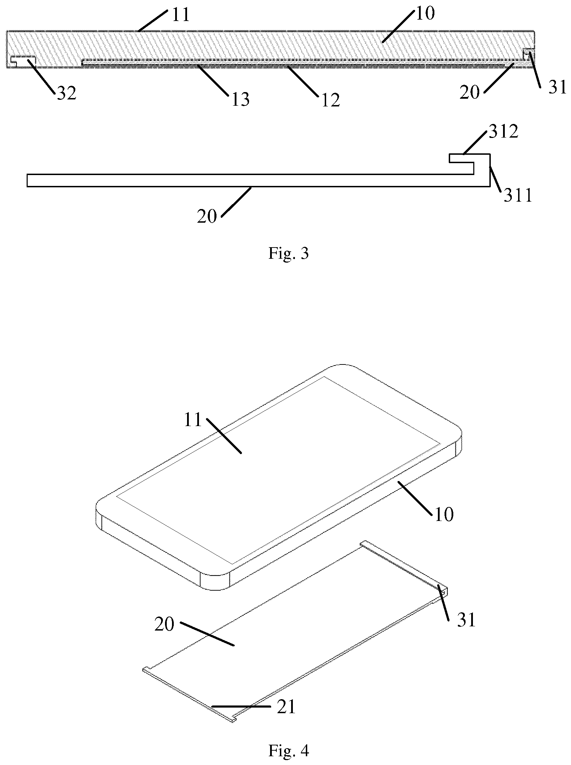

Preferably, referring to Fig. 3 at the same time, Fig. 3 illustrates a side schematic view of a wristband mobile terminal according to an embodiment of the present disclosure. As illustrated in Fig. 3, the connecting portion 30 includes a connecting element 31 provided at the second end of the ring band 20 and a connecting cavity 32 provided in the other short edge 15 of the back face of the terminal body 10. The other short edge 15 is a short edge away from the short edge where the opening of the containing portion 13 is positioned.

Further, the connecting element 31 at the second end can be snapped in the connecting cavity 32 provided in the short edge 15, such that the wristband mobile terminal can form the closed ring.

Specifically, the connecting element 31 at the second end includes a first surface 311 and a second surface 312, in which the first surface 311 is arranged in perpendicular to a plane where the ring band 20 is and the second surface 312, and the second surface 312 is arranged in parallel to the plane where the ring band 20 is. Further, the connecting cavity 32 in the short edge is L-shaped. That is, the connecting cavity 32 in the short edge 15 includes a first cavity surface and a second cavity surface, the second cavity surface is parallel to the back face of the terminal body 10, and the first cavity surface is perpendicular to the second cavity surface and the back face of the terminal body 10. Further, the second cavity surface has a width greater than or equal to a width of the second surface 312 of the connecting element 31 at the second end, such that the connecting element 31 at the second end can be stably snapped in the connecting cavity 32 in the short edge 15.

Further, when the containing portion 13 is the containing cavity, the containing cavity is band-shaped, and includes a pair of long edges arranged opposite each other and a pair of short edges arranged opposite each other. The pair of short edges of the containing cavity is connected with the pair of long edges of the containing cavity to form the containing cavity.

Specifically, the pair of long edges of the containing cavity is parallel to the pair of long edges of the terminal body 10, while the pair of short edges of the containing cavity is parallel to the pair of short edges of the terminal body 10, and the long edge of the containing cavity has a length less than a length of the long edge of the terminal body 10. The opening of the containing cavity is provided in one of the short edges of the containing cavity, and has a length less than a length of the short edge of the containing cavity. That is, the containing cavity does not run through the terminal body 10.

Further, the ring band 20 has a width less than or equal to the length of the opening of the containing cavity.

Preferably, referring to Fig. 4 at the same time, Fig. 4 illustrates a schematic view of yet another wristband mobile terminal according to an embodiment of the present disclosure. As illustrated in Fig. 4, when the containing portion 13 is configured as the containing cavity, the ring band 20 can also be provided with a fixing member 21, the fixing member 21 has a length greater than the length of the opening of the containing cavity and less than the length of the short edge of the containing cavity.

In other words, the length of the fixing member 21 is greater than the width of the ring band, and since the length of the opening of the containing cavity is less than or equal to the length of the short edge of the containing cavity, the fixing member 21 cannot protrude from the opening of the containing cavity, and hence the ring band 20 is not allowed to be completely drawn out of the containing cavity.

That is, when the user draws a part of the ring band 20 from the containing portion 13 and the ring band 20 is connected to the terminal body through the connecting portion 30, the user's wrist is just attached to the ring band 20 and the back face of the terminal body 10. In such a case, the remaining part of the ring band 20 needs to be secured in the containing portion 13 through the fixing member 21, to prevent the wristband mobile terminal from slipping off the user's wrist when the user wears it.

Further, one fixing member 21 or a plurality of fixing members 21 can be provided, and can be arranged at the second end of the ring band 20 or in a middle position of the ring band 20, which will not be limited in the embodiment of the present disclosure.

Preferably, the ring band 20 can be completely contained in the containing portion 13, or can be partially contained in the containing portion 13, which will not be limited in the embodiment of the present disclosure. When the ring band 20 is completely contained in the containing portion 13, the connecting element 31 at the second end is disposed at the opening of the containing portion 13.

In the embodiment of the present disclosure, when the user does not wear the wristband mobile terminal, the ring band 20 can be completely contained in the containing portion 13, and in such a case, the connecting element 31 at the second end can be disposed at the opening of the containing portion 13, and the wristband mobile terminal can be used as an ordinary mobile terminal. When the wristband mobile terminal needs to be worn (for example, the wristband mobile terminal is bent), the user can draw the ring band 20 from the opening of the containing portion 13 by applying a force to the connecting portion 31 at the second end, in which case the connecting element 31 at the second end can be connected to the connecting cavity 32 in the short edge 15. When the connecting element 31 at the second end is connected to the connecting cavity 32 in the short edge 15, the ring band 20 and the terminal body 10 form the closed ring, and the user can wear it on the wrist.

In the embodiment of the present disclosure, the ring band 20 can be drawn out of the containing portion 11 when in need, and can be contained in the containing portion when it is not needed, thereby avoiding affecting the aesthetic appearance of the wristband mobile terminal, and improving the portability of the wristband mobile terminal.

Accordingly, in the wristband mobile terminal illustrated in Figs. 1-4, the wristband mobile terminal includes the terminal body, the ring band, and the connecting portion; the terminal body has the display screen face and the back face arranged opposite each other, the display screen face is used for displaying content and performing touch operations, and the back face is provided with the containing portion; the ring band is contained in the containing portion; the connecting portion is provided between the ring band and the terminal body. When the ring band is connected to the terminal body through the connecting portion, the wristband mobile terminal forms the closed ring. With the embodiments of the present disclosure, the ring band can be contained in the containing portion when not in need, and hence the wristband mobile terminal can act as an ordinary mobile terminal; when in need, the ring band can be connected to both ends of the terminal body, and thus the user can wear it on the wrist. As a result, it is possible to effectively achieve a balance between the increased screen size and the inconvenient-to-carry problem of the mobile terminal, and improve the portability and flexibility of the wristband mobile terminal.

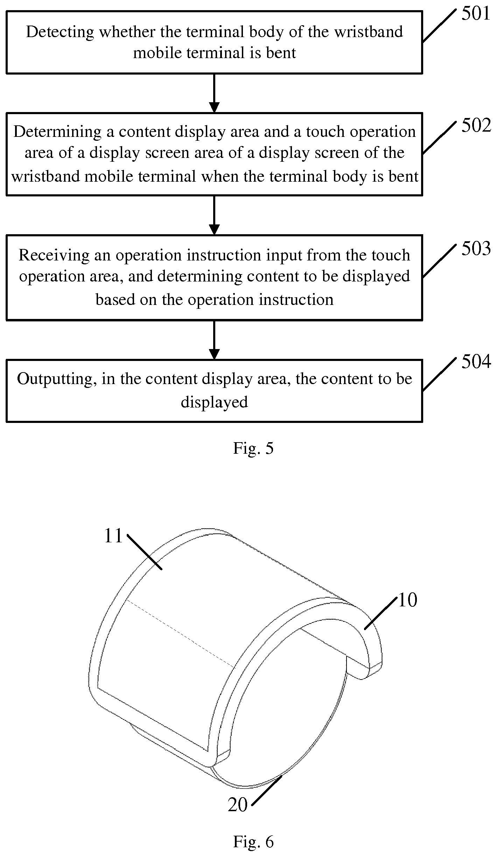

Referring to Fig. 5 that illustrates a flow chart of a control method for a wristband mobile terminal according to an embodiment of the present disclosure, the method in Fig. 5 can be applied to the wristband mobile terminal illustrated in Figs. 1-4. As illustrated in Fig. 5, the method can include the following operations at blocks illustrated in fig. 5.

501: the wristband mobile terminal detects whether the terminal body is bent.

Referring to Fig. 6 at the same time, Fig. 6 illustrates a schematic view of yet another wristband mobile terminal according to an embodiment of the present disclosure. As illustrated in Fig. 6, a terminal body 10 of the wristband mobile terminal is flexible and can be bent by an external force. Meanwhile, the wristband mobile terminal further includes a ring band 20, and the ring band 20 can be connected to both ends of the terminal body 10. The terminal body 10 includes a display screen face 11 provided with a display screen, and the display screen may specifically be a flexible display screen. The flexible display screen is a display screen that can be bent and folded.

In the embodiment of the present disclosure, the wristband mobile terminal can detect in real time whether the terminal body 10 is bent. Specifically, a plurality of force sensors can be provided to a housing of the terminal body, and if each force sensor detects pressure having a pressure value greater than a preset threshold, it can be determined that the terminal body 10 is bent.

502: when the terminal body is bent, the wristband mobile terminal determines a content display area and a touch operation area of a display screen area of the display screen.

Normally, the display screen area of the display screen can display content, and allow the user to perform touch operations on the display screen area. In the embodiment of the present disclosure, when it is detected that the terminal body 10 is bent, the wristband mobile terminal may divide the display screen area of the display screen into the content display area (such as an area marked by dotted lines in Fig. 6) and the touch operation area.

It should be noted that the content display area is mainly used for displaying content, but the user can also perform touch operations on the content display area, and the touch operation area can only be used for being operated by the user at this time and cannot display the content. For example, when the wristband mobile terminal receives a short message, the content display area only displays the content of the short message, and if the user needs to reply to the short message, the content that needs to be replied can only be input through a virtual keyboard of the touch operation area.

In the embodiment of the present disclosure, the content display area may be an intermediate area of the display screen area of the display screen, or may be any area of the display screen area, which is not limited in the embodiment of the present disclosure.

Preferably, the position of the content display area can also be automatically adjusted according to the wearing position of the user. For example, when the user wears the wristband mobile terminal, the wristband mobile terminal can detect a bending degree of the terminal body 10, and a portion of the display screen area of the display screen, corresponding to a less bent portion, is used as the content display area.

Preferably, the size of the content display area may be determined by the type of content to be displayed.

Specifically, when the user wears the wristband mobile terminal on the wrist, the wristband mobile terminal can determine the size of the content display area according to the type of the content to be displayed. For example, the display screen is initially in an off-screen state, and when a short message or a message from instant messaging software is received, the wristband mobile terminal can display the received short message or the message from the instant messaging software in the form of a message box, so as to remind the user, in which case only an area where the message box is located is lit and serves as the content display area. For another example, when the wristband mobile terminal enters a game or a video application, the entire screen display area of the flexible display screen can be used as the content display area.

It can be seen that determining the size of the content display area by the type of the content to be displayed can reduce power consumption of the wristband mobile terminal to a certain extent.

503: the wristband mobile terminal receives an operation instruction input from the touch operation area, and determines the content to be displayed based on the operation instruction.

504: the wristband mobile terminal outputs the content to be displayed in the content display area.

In the embodiment of the present disclosure, the user can perform a touch operation on the wristband mobile terminal in the touch operation area, thereby converting the touch operation into a corresponding operation instruction. For example, text is input through the virtual keyboard of the touch operation area, and the screen brightness of the touch operation area is reduced or even extinguished when the virtual keyboard is canceled; for another example, display interfaces are switched through the touch operation area, which will not be limited in the embodiment of the present disclosure.

When the operation instruction is input in the touch operation area, the wristband mobile terminal can receive the operation instruction input by the user, and determine corresponding content to be displayed according to the operation instruction.

For example, when the user inputs text in the touch operation area, the wristband mobile terminal can display the input text in the content display area.

Since the wristband mobile terminal is bent into a closed ring when the user wears the wristband mobile terminal, the content displayed in the display screen area of the display screen may not be seen by the user completely at the same time. Therefore, a part of the display screen area of the display screen is used for displaying content, and the remaining part thereof is used as the touch operation area, which can improve the display effect of the wristband mobile terminal when it is worn, and thereby upgrade user experience.

It can be seen that, in the method described in Fig. 5, when the wristband mobile terminal is bent, the display screen area can be divided into the content display area and the touch operation area, thereby improving the display effect of the wristband mobile terminal when it is worn.

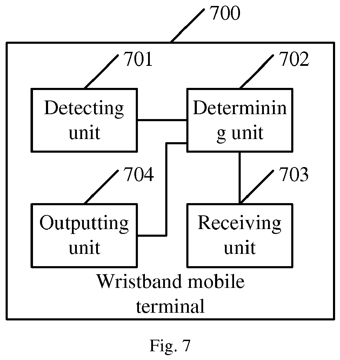

Referring to Fig. 7 that illustrates a schematic view of yet another wristband mobile terminal according to an embodiment of the present disclosure, a wristband mobile terminal 700 in Fig. 7 can execute the control method for the wristband mobile terminal in Fig. 5. As illustrated in Fig. 7, the wristband mobile terminal 700 can include:
a detecting unit 701 configured to detect whether a terminal body is bent;
a determining unit 702 configured to determine a content display area and a touch operation area of a display screen area of a display screen of the wristband mobile terminal 700 when the detecting unit 701 detects that the terminal body is bent, in which specifically, the content display area may be an intermediate area of the display screen area of the display screen, or may be any area of the display screen area, which is not limited in the embodiment of the present disclosure;
a receiving unit 703 configured to receive an operation instruction input from the touch operation area;
said determining unit 704 configured to determine content to be displayed according to the operation instruction received by the receiving unit 703; and
an output unit 705 configured to output, in the content display area, the content to be displayed determined by the determining unit 704.

It can be seen that, in the wristband mobile terminal described in Fig. 7, when the wristband mobile terminal is bent, the display screen area can be divided into the content display area and the touch operation area, thereby improving the display effect of the wristband mobile terminal when it is worn.

The wristband mobile terminal and the control method thereof provided by the present disclosure are described in detail. The principles and implementations of the present disclosure are described by way of specific examples. The description of the above embodiments is only for ease of interpretation of the present disclosure. At the same time, those skilled in the art may make changes in specific implementations and applications based on the concept of the present disclosure. In conclusion, the content of the specification shall not be constructed to limit the present disclosure.

## Claims

1. A wristband mobile terminal, comprising a terminal body, a ring band and a connecting portion, the terminal body having a display screen face and a back face opposite to each other, the display screen face being used for displaying content and a touch operation, and the back face being provided with a containing portion; the ring band being contained in the containing portion; and the connecting portion being provided between the ring band and the terminal body, wherein when the ring band is connected to the terminal body through the connecting portion, the wristband mobile terminal forms a closed ring.

2. The wristband mobile terminal of claim 1, wherein the terminal body has a pair of long edges disposed opposite each other and a pair of short edges disposed opposite each other, the pair of short edges being connected with the pair of long edges; the containing portion is a containing cavity provided in the back face, and the containing cavity has an opening located in one of the short edges; the ring band has a first end and a second end, the first end is slidably provided in the containing cavity and the second end protrudes to the outside of the terminal body through the opening of the containing cavity and is connected to the terminal body by means of the connecting portion, so that the wristband mobile terminal forms the closed ring.

3. The wristband mobile terminal of claim 1, wherein the terminal body has a pair of long edges disposed opposite each other and a pair of short edges disposed opposite each other, the pair of short edges being connected with the pair of long edges; the containing portion is a reel provided in the back face and located in one of the short edges; the ring band has a first end and a second end, the first end is wound around the reel, and the second end protrudes to the outside of the terminal body through the reel and is connected to the terminal body by means of the connecting portion, so that the wristband mobile terminal forms the closed ring.

4. The wristband mobile terminal of claim 2 or 3, wherein the connecting portion comprises a connecting element provided at the second end of the ring band and a connecting cavity provided in the other short edge of the back face of the terminal body; the connecting element at the second end is snapped in the connecting cavity provided in the short edge, such that the wristband mobile terminal forms the closed ring.

5. The wristband mobile terminal of claim 4, wherein the connecting element at the second end comprises a first surface and a second surface, the second surface being parallel to a plane where the ring band is, and the first surface being perpendicular to a plane where the first surface is and the plane where the ring band is.

6. The wristband mobile terminal of claim 4, wherein the connecting cavity in the short edge is L-shaped.

7. The wristband mobile terminal of claim 1, wherein the terminal body is flexible and can be bent by an external force.

8. The wristband mobile terminal of claim 2, wherein the containing cavity comprises a pair of long edges arranged opposite each other and a pair of short edges arranged opposite each other, the pair of short edges of the containing cavity being connected with the pair of long edges of the containing cavity; the opening of the containing cavity is provided in one of the short edges of the containing cavity; the long edges of the containing cavity have a length less than a length of the long edges of the terminal body, and the opening of the containing cavity has a length less than or equal to a length of the short edge of the containing cavity.

9. The wristband mobile terminal of claim 8, wherein the ring band is provided with a fixing member, and the fixing member has a length greater than the length of the opening of the containing cavity and less than the length of the short edges of the containing cavity.

10. A control method for a wristband mobile terminal, wherein the wristband mobile terminal comprises a flexible terminal body, the terminal body can be bent by an external force,
the method comprises:
detecting whether the terminal body is bent;
determining a content display area and a touch operation area of a display screen area of a display screen of the wristband mobile terminal, when the terminal body is bent;
receiving an operation instruction input from the touch operation area, and determining content to be displayed based on the operation instruction; and
outputting the content to be displayed in the content display area.

11. The method of claim 10, wherein the content display area is an intermediate area of the display screen area.

12. The method of claim 10, wherein a position of the content display area is determined according to a wearing position of the wristband mobile terminal.

13. The method of claim 10, wherein the wristband mobile terminal further comprises a ring band and a connecting portion; the terminal body has a display screen face and a back face opposite to each other, the display screen face being used for displaying content and a touch operation, and the back face being provided with a containing portion; the ring band is contained in the containing portion, and the connecting portion is provided between the ring band and the terminal body; when the ring band is connected to the terminal body through the connecting portion, the wristband mobile terminal forms a closed ring.

14. The method of claim 13, wherein the terminal body has a pair of long edges disposed opposite each other and a pair of short edges disposed opposite each other, the pair of short edges being connected with the pair of long edges; the containing portion is a containing cavity provided in the back face, and the containing cavity has an opening located in one of the short edges; the ring band has a first end and a second end, the first end is slidably provided in the containing cavity, and the second end protrudes to the outside of the terminal body through the opening of the containing cavity and is connected to the terminal body by means of the connecting portion, so that the wristband mobile terminal forms the closed ring.

15. The method of claim 13, wherein the terminal body has a pair of long edges disposed opposite each other and a pair of short edges disposed opposite each other, the pair of short edges being connected with the pair of long edges; the containing portion is a reel provided in the back face and located in one of the short edges; the ring band has a first end and a second end, the first end is wound around the reel, and the second end protrudes to the outside of the terminal body through the reel and is connected to the terminal body by means of the connecting portion, so that the wristband mobile terminal forms the closed ring.

16. The method of claim 14 or 15, wherein the connecting portion comprises a connecting element provided at the second end of the ring band and a connecting cavity provided in the other short edge of the back face of the terminal body; the connecting element at the second end is snapped in the connecting cavity provided in the short edge, such that the wristband mobile terminal forms the closed ring.

17. The method of claim 16, wherein the connecting element at the second end comprises a first surface and a second surface, the second surface being parallel to a plane where the ring band is, and the first surface being perpendicular to a plane where the first surface is and the plane where the ring band is.

18. The method of claim 16, wherein the connecting cavity in the short edge is L-shaped.

19. The method of claim 14, wherein the containing cavity comprises a pair of long edges arranged opposite each other and a pair of short edges arranged opposite each other, the pair of short edges of the containing cavity being connected with the pair of long edges of the containing cavity; the opening of the containing cavity is provided in one of the short edges of the containing cavity; the long edges of the containing cavity have a length less than a length of the long edges of the terminal body, and the opening of the containing cavity has a length less than or equal to a length of the short edge of the containing cavity.

20. The method of claim 19, wherein the ring band is provided with a fixing member, and the fixing member has a length greater than the length of the opening of the containing cavity and less than the length of the short edges of the containing cavity.
